# EUROPEAN PATENT APPLICATION

(11) **EP 4 393 766 A1**
(43) Date of publication of application: **03.07.2024**
(21) Application number: 23220625.0
(22) Date of filing: 28.12.2023
(51) Int. Cl.: B60L 53/80

(54) **AUTOMATIC APPARATUS FOR REPLACING BATTERIES OF ELECTRIC PROPULSION VEHICLES**

(30) Priority: 30.12.2022 IT 202200027342
(71) Applicant: Tecnobus Industries Srl, 04100 Latina (LT) (IT)
(72) Inventor: MARSILI, Giovambattista, 00152 Roma (IT)
(74) Representative: Cavattoni, Raimondi & Luppi Srl

(57) **Abstract**

Apparatus for automatically replacing batteries of electric propulsion vehicles including:
- a cabinet (1000) including:
- a first storage space (1100) configured to house at least one charged battery (1C) and at least one dead battery (1E);
- a second operating space (1200), communicating with the first storage space to move the batteries (1E, 1C);
- operating means (1220, 1230) displaceable in a longitudinal direction (X-X) between the operating space (1200) and a predefined parking area of the vehicle, configured to remove/insert one or more dead batteries (1E)/charged batteries (1C) from/into the vehicle (10) and into/from the first storage space (1100);
- positioning means (1150) for positioning a vehicle in the parking area in a predefined position with respect to the operating space;
- sensor means designed to detect the positioning of the vehicle and/or of a battery arranged inside the vehicle and emit corresponding position signals;
- a process and control unit (500) designed to receive said position signals and control the operating means.

## Description

The object of this invention is an automatic apparatus for replacing batteries of electric propulsion vehicles.

In the road transport industry, the evolution of vehicle propulsion towards an electric supply obtained from batteries in the vehicle is known.

It is also known that one of the current limits of these batteries is the limited working life thereof in relation to the effective use thereof.

Such limits are particularly penalizing in public transport provided by buses on urban routes.

In order to overcome such limits, a solution is also known that is the object of a previous patent IT238801MU in the name of the current Applicant, which involves housing rechargeable batteries in the vehicle that are designed to be extracted from the vehicle to enable the dead battery to be replaced with a charged battery and the dead battery to be subsequently recharged.

Although this solution serves its purpose, it has limits that are mainly due to the fact that in the practical use of the system the battery change requires manual operations that have to be performed by an expert operator to be carried out correctly, generally in a vehicle storage station.

As a result, in addition to the difficulty of properly training operators, there is the necessary availability of the specialist operator required, which ends up by affecting the organization of working shifts.

In addition to this, most of the applications are currently limited to a single shift with the restoration task being performed at the start of the day; as the organization of the service is possible only within a limited area with respect to the recharging point and the current batteries permit a range of about 100 km that on an urban route travelled at an average speed of no more than 15 km/h can cover no more than 6-8 hours, a rapid change according to the prior art does not lead to the range limits of the vehicle actually being exceeded.

The technical problem therefore arises of devising an apparatus for rapidly changing the batteries of an electric vehicle that solves or at least attenuates the prior-art problems, with particular reference to the possibility of avoiding or limiting manual tasks performed by specially trained operators.

This problem also requires the apparatus to be compact and easy and cheap to manufacture, assemble and install.

Such results are obtained according to the present invention by an automatic apparatus for replacing batteries of electric propulsion vehicles according to the features of claim 1.

Such an apparatus includes in particular: a cabinet, in turn including a first storage space, configured to house at least one charged battery and at least one dead battery, and a second operating space communicating with the first space to move the batteries; operating means displaceable in a longitudinal direction, lying on a horizontal plane, between the operating space and a predefined parking area of the vehicle, configured to remove/insert one or more batteries from/into the vehicle and into/from the first storage space; positioning means for placing a vehicle in the parking area in a predefined position with respect to the operating space; and sensor means designed to detect the positioning of the vehicle and/or of a battery arranged inside the vehicle and emit corresponding position signals. A processing and control unit is further designed to receive said position signals and control the operating means.

In preferred embodiments, said storage space includes at least two housing compartments, each designed to contain a battery. Each compartment can include a support surface and movement means for moving the battery in a direction transverse with respect to said longitudinal direction, in order to insert/remove the battery into/from the compartment, preferably including rollers extending in the longitudinal direction and able to be rotated about a longitudinal axis. The first storage space can further include means for recharging and/or monitoring the charged state of the one or more stored batteries.

Preferably, the apparatus includes a platform that is displaceable in both senses of a vertical direction in the second operating space, between a lowered position substantially corresponding to a level for the motion of the operating means between the operating space and the parking area, and one or more raised levels corresponding to one or more compartments of the first space for storing a battery.

In the present description, the term horizontal means "perpendicular to the direction of the force of gravity" and the term vertical means "parallel to the direction of the force of gravity".

Said operating means for removing/inserting one or more batteries preferably includes a shuttle that is displaceable in both senses of the longitudinal direction from a position retracted inside the operating space to an advanced position of positioning in the parking area of the vehicle, below the battery to be removed from the vehicle; the shuttle is for example moved in both senses of the longitudinal direction by a position-controlled drive, preferably an electric drive which rotates driving wheels of the shuttle.

The operating means, in particular the shuttle, can further include means for raising/lowering a battery in a vertical direction, preferably including forks for gripping and supporting a battery, movable in both senses of the vertical direction.

In preferred embodiments, there is a position-controlled drive for controlling the battery raising/lowering means in the vertical direction, in particular for controlling the motion of said forks in the vertical direction.

The operation of the means for raising/lowering a battery can for example include a motor, controlled in position and connected to a ball screw the ball nut of which is connected to a kinematic chain designed to cause the movement of the forks in both senses of the vertical direction to raise/lower the battery during the removal/insertion steps.

Advantageously, the operating means, in particular the shuttle, can be equipped with means for moving a battery in a longitudinal direction, preferably including rollers extending in the longitudinal direction and drivable in two opposite senses of rotation; the drive can more advantageously be controlled in position.

In preferred embodiments, the vehicle positioning means includes an end-of-travel reference stop for stopping the travel of the vehicle in the longitudinal direction, and/or position markers arranged at a suitable distance from each other in said transverse direction for correct positioning of the vehicle in the transverse direction.

Preferably, the position sensors include one or more sensors designed to measure a distance of one or more reference surfaces of the vehicle and/or of the battery in the vehicle to determine a real position in the transverse direction of the battery in the vehicle in relation to the parking area; said sensors being preferably of the contactless detection type.

The apparatus can further include sensors for detecting the position of the battery in the vertical direction and the control can include areas for storing the positioning coordinates of the vehicle in the two directions, longitudinal and transverse, of the battery in the vertical direction detected during positioning of the vehicle in the parking area and/or extracting area of the dead battery from the vehicle.

In one embodiment that is particularly designed for use in urban public transport, the cabinet includes safety doors which can be operated so as to be arranged in a closed position which defines a safety perimeter which encloses the first and the second space of the cabinet and at least partially the parking area of the vehicle, preventing access from the outside, and an open position for allowing access to the cabinet and/or to the parking area.

Preferably, the doors can also be operated so as to be arranged in a rest position, with safety closing of the cabinet when it is not used to replace the batteries.

An automatic station for the replacement of batteries of electric propulsion vehicles according to the features of claim 14 and a method for replacing a dead battery of a vehicle with a charged battery, according to the features of claim 16 are a further object of the invention.

Further details can be obtained from the following description of a non-limiting embodiment of this invention provided with reference to the enclosed drawings, in which the following is shown:
in Figure 1: a perspective view of the apparatus according to the present invention in a position adjacent to an electric propulsion vehicle;
in Figure 2: a perspective view from above of the mechanical components of the apparatus according to the present invention;
in Figure 3: a frontal view of the front of a battery-conveying shuttle that is part of the apparatus;
in Figure 4: a frontal view from behind of the battery-conveying shuttle of Figure 3;
in Figure 5: a frontal view of the storage space chamber for storing charged/dead batteries;
in Figure 6: a schematic section of the drives of the shuttle that is part of the apparatus;
in Figure 7: a partial perspective view of the shuttle in lowered position on the ground;
in Figure 8: a side view of the shuttle advancing longitudinally below the dead battery placed inside the vehicle;
in Figure 9: a side view similar to the preceding one with a shuttle lifting up to grip the dead battery;
in Figure 10: a side view of the shuttle retracted onto the platform with dead battery;
in Figure 11: a partial perspective view of the apparatus with platform and dead battery during the lifting step;
in Figure 12: a perspective view of a storage space with the carriage during the step of depositing the dead battery; and
in Figure 13: a perspective view of a storage space with the carriage during the step of removing a charged battery.

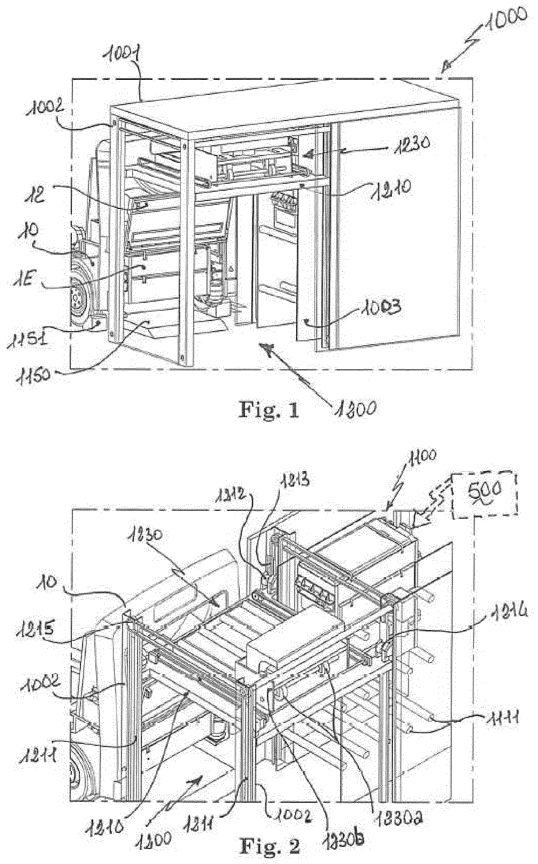

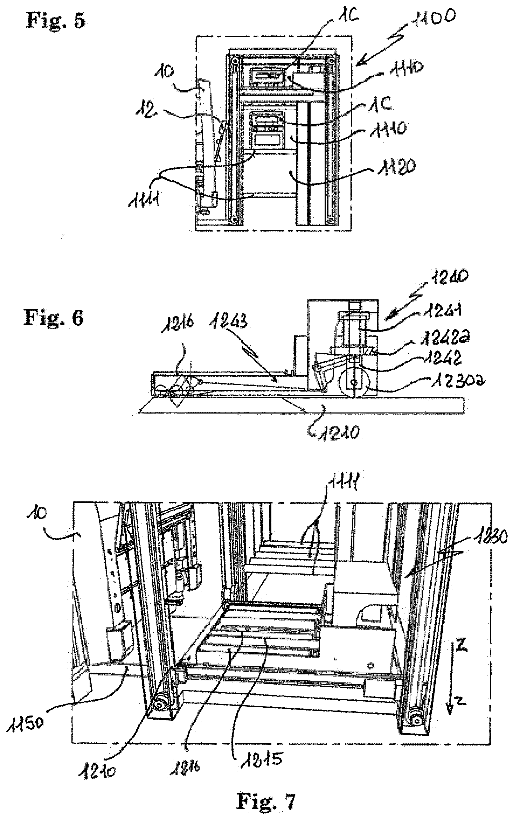

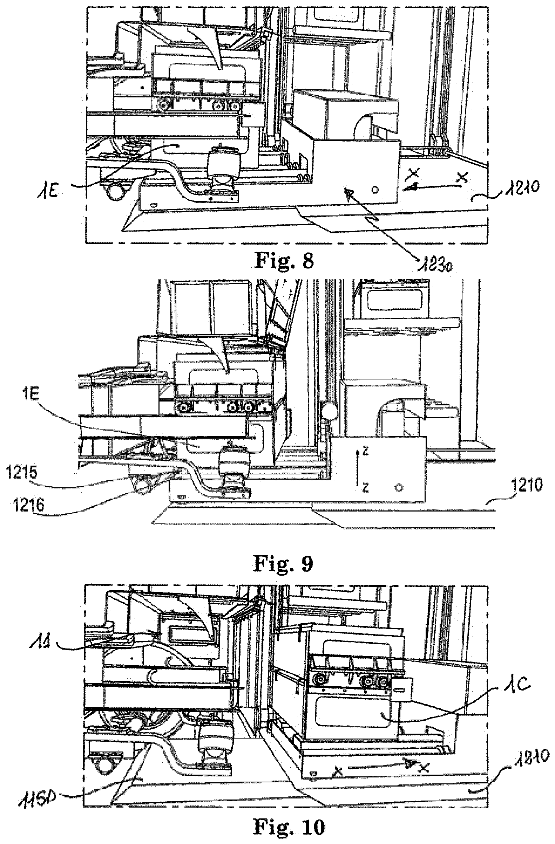

As illustrated in Figure 1, three reference axes are assumed only for ease of reference, respectively a first axis X-X, in said longitudinal direction, parallel to a motion direction of the operating means of the apparatus between an operating space and a parking area of the vehicle; a second axis Y-Y of the apparatus, in said transverse direction, orthogonal to the preceding one and parallel to a direction of inserting/extracting a battery into/from the first storage space of the cabinet, and a third axis Z-Z in a vertical direction, perpendicular to a plane defined by the first axis X-X and by the second axis Y-Y, a preferred embodiment of the apparatus for automatic replacement of batteries for vehicles according to the invention includes:
- a cabinet 1000 that includes a frame 1001 with vertical uprights 1002 and is divided into functional spaces, namely:
- a first storage space 1100 including (Figure 5) at least one plane, two in the illustrated embodiment, that define housing compartments 1110 housing charged batteries 1C and at least one housing compartment 1120 housing a dead battery 1E; each plane is provided with rollers 1111 extending in the longitudinal direction X-X and rotatable to facilitate inserting/extracting the batteries in the transverse direction Y-Y from the respective compartment,
- a second operating space 1200, communicating with the first space in the transverse direction Y-Y inside which means is arranged for moving a battery, with battery insertion/removal devices; such devices are in particular configured to remove/insert dead batteries 1E/charged batteries 1C from/into the compartment 11 (Figure 10) of the vehicle 10 inside which the batteries are arranged during operation; the compartment 11 of the vehicle is in turn provided with a closing/opening door 12.

The batteries 1C, 1E are replaceable for this purpose, for example provided with grooved wheels resting on longitudinal guides inside the housing compartment of the vehicle and fixed to the frame of the vehicle. The solution is in itself conventional and is not described and/or illustrated further.

Preferably, the cabinet includes safety doors 1003 which can be operated so as to be arranged in a closed position for defining a safety perimeter that encloses the two spaces of the cabinet and the parking area of the vehicle, preventing access from the outside during the replacement steps, and in an open position to permit manoeuvring by the driver, as disclosed better below.

Preferably, the doors 1003 can also be operated so as to be arranged in a rest position, with safety closing of the cabinet when the cabinet is not being used to replace batteries.

The second operating space 1200 includes (Figure 2) a platform 1210 that is displaceable in both senses of the vertical direction Z-Z from a lowered position substantially corresponding to the level of removing a dead battery from the compartment 11 of the vehicle 10 and the level of inserting a charged battery into the compartment 11 of the vehicle 10, to several raised positions corresponding to the level of said compartments of the first space including: at least one free compartment 1120 for depositing the dead battery 1E for recharging and at least one housing compartment 1110 housing a charged battery 1C to be removed.

In this embodiment, the first storage space thus includes several housing compartments 1120, 1110 arranged on different levels in the vertical direction Z-Z. It means that the housing compartments of the first storage space could also all be at the same level and in particular at the level of the lowered position of the platform 1210, so that the platform itself can be stationary in the vertical direction or be simply constituted by a basic surface of the operating space.

The platform 1210 is moved by driving means in the vertical direction, in the embodiment including four vertical chains 1211, each mounted on a respective upright 1002 of the frame and connected by horizontal chains 1212 and by a transmission that is in itself conventional that is not illustrated that is driven by a respective controlled geared motor.

The stroke of the platform 1210 is guided by grooved guides 1213 that are integral with the uprights 1 002 on which wheels 1214 roll that are arranged at the four corners of the platform.

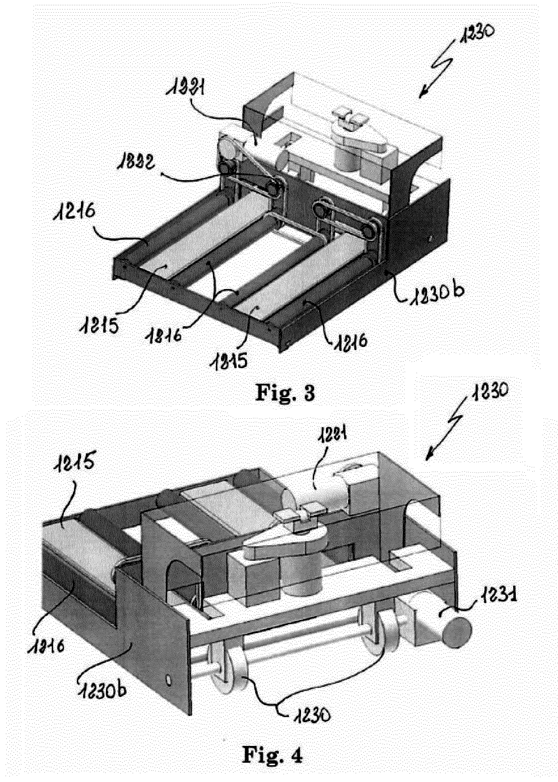

The movement means for removing/inserting the batteries 1E/1C includes a shuttle 1230 (Figures 3, 4) that rests on four wheels 1230a two of which are idler wheels and two of which are connected to a chain transmission driven by a geared motor 1231 (Figure 4) controlled in position; in this manner, the shuttle 1230 is displaceable in both senses of the longitudinal direction X-X from a position retracted inside the area of the platform 1210 and thus in the operating space to an advanced position of positioning in the parking area of the vehicle, below the battery 1E to be removed from the compartment 11 of the vehicle. The shuttle includes a shuttle frame 1230b with which two forks 1215 are associated extending in the longitudinal direction X-X.

Each fork 1215 is associated with rollers 1216 extending in the longitudinal direction X-X and drivable in the two clockwise/anticlockwise directions of rotation for moving a battery in the transverse direction Y-Y.

The set of rollers 1216 forms a roller conveyor 1223 for moving a battery in the transverse direction Y-Y.

The shuttle 1230 houses two further movement drives 1220 and 1240, respectively:
- an movement drive 1220 for moving the roller conveyor 1223 for moving the batteries in the transverse direction Y-Y, in the embodiment including a geared motor 1221 and a kinematic chain 1222 (Figure 3) connected to the roller conveyor 1223 and designed to rotate the movement rollers 1216 for moving the batteries in the transverse direction Y-Y,
- a movement drive 1240 for moving the forks 1215, in the embodiment including a motor 1241 (Figure 6) connected to a ball screw 1242 the ball nut of which 1242a is connected to a kinematic chain 1243 designed to cause the movement in both senses of the vertical direction Z-Z of the forks 1215 to raise/lower the batteries during the removal/insertion steps to replace the batteries.

The position of both operating means is controllable.

The cabinet 1000 is associated with a process and control unit 500 for processing and controlling the signals emitted by the various sensors and controlling the various movement actuating devices.

In the rest surface of the forks, plates are preferably integrated, which are not illustrated, connected to detecting sensors that are able to report that contact has been made between the forks and the lower surface of the battery.

The station control unit is thus able to ensure lifting of the dead battery, which releases the rest wheels thereof from the guides present on the frame of the vehicle.

Preferably, on the surfaces of the forks in contact with the battery zones are further present that are covered with a friction material that makes the movement reliable for bringing the unit outside the vehicle.

The apparatus further includes means for correct positioning of the vehicle in the stop and parking area with respect to the operating space of the cabinet; a preferred embodiment of said positioning means provides a platform 1150 resting on the ground provided with an end of travel reference stop 1151, for example in the shape of wedges, for stopping the travel of the vehicle 10 in the longitudinal direction X-X, and position markers 1152 drawn on the ground alongside the wedges 1151 and arranged at a suitable distance from each other in the transverse direction Y-Y, designed to guide the driver visually for correct positioning of the vehicle in the transverse direction Y-Y at the moment of the approach to the battery replacement apparatus.

For positioning in the transverse direction Y-Y, suitable tolerances can be configured that are accepted by the control unit 500 of the apparatus as indicating correct positioning.

Further, in one embodiment, the platform can be constrained on the cabinet, for example by hinges, with the possibility of rotating from a raised closed position to a lowered rest position on the ground for replacement operations or, alternatively, being fixed in the rest position on the ground.

With this configuration, operation of the equipment is as follows:

### Extracting dead battery

The correct final extraction position is linked to the real position of the vehicle manoeuvring in the transverse direction Y-Y, for the control of which contactless sensors are preferably provided to measure the distance of reference surfaces in the zone of the vehicle near the battery; in detail, two series of sensors are provided:
- a first series fitted outside the structure 1000, to target the outer bodywork of the vehicle and check the approximate approach performed by the driver;
- a second series of more precise sensors fitted to the shuttle inside the automatic battery replacement compartment.

In the operation of approaching the end-of-travel stops 1151, the outer sensors can generate an alarm for the driver if the driver has not managed to follow sufficiently accurately the direction lines painted on the ground.

When an approximately correct position of the vehicle is reached in the longitudinal direction X-X and in the transverse direction Y-Y, near the parking zone in front of the operating space of the cabinet of the apparatus, the driver gets out to open a rear door 12 of the vehicle immobilizing the door in the open position, also commanding the opening of the doors 1003 of the cabinet.

Returning to the driving position, the driver will move in the longitudinal direction X-X until reaching the correct final position in the parking zone, with wheels resting on the end-of-travel stops 1151 of the platform 1150, and in the transverse direction Y-Y to reach the correct position inside the markers 1152.

If positioning is outside the set tolerances, the control unit 500 can send a signal for the manoeuvring driver until the correct positioning is reached in the same manner as what is achieved in the preliminary approach step.

The positioning coordinates in the two directions, the longitudinal direction X-X and the transverse direction Y-Y, are stored by the control 500 for subsequent use during the step of inserting the charged battery as disclosed better below.

In the disclosed embodiment, the pneumatic suspension of the vehicle enables the vehicle to be lowered, creating a sufficiently controlled reference, in the vertical direction Z-Z.

With the detected reference X-X and Y-Y and a reference Z-Z made independent of the geometry of the wheels, the automatic checks of the correct position of the vehicle in the parking area are started, for example, the position is detected thanks to sensors that are able to measure the position of the outer vertical wall of the battery from the initial position of the shuttle: in a positive case, an authorization signal is emitted for the driver, who gets out, to mechanically unlock the battery to be removed and disconnect the electric cables that connect the battery to the circuit of the vehicle. These extremely simple operations add a visual control of the driver that complements the safety functions of the system.

Once the battery is disconnected, the driver, for example by suitable controls outside the apparatus, sends the control 500 confirmation signals that enable the automatic battery replacement sequence;
- the first step in the procedure closes the safety doors 1003 in the position which defines the safety perimeter;
- the platform 1210 starts to move down (Figure 7) until the lowered position at the platform 1150 at ground level is reached;
- when the position on the platform is reached, the motor 1231 of the shuttle (Figure 8) is activated,
- which is displaced in the longitudinal direction X-X to the outside of the platform until a position is reached with the forks 1215 below the dead battery 1E to be removed, the movement being actuated by the motor controlled in position, preferably on the basis of said sensors for detecting the real position of the vehicle;
- before the dead battery 1E is picked up, the real positioning dimensions of the battery inside the compartment 11 of the vehicle with respect to the shuttle are detected; for this purpose, there are provided:
   - two distance sensors that, with the battery extracted, measure at two points the distance in the direction X-X between the shoulder of the shuttle and the rear wall of the battery;
   - a third sensor that faces the side wall of the battery and is designed to measure the position in the transverse direction Y-Y, during the step of extracting the battery with the latter still aligned on the guides inside the vehicle;
   - all the data detected by the three sensors are stored by the control 500;
- the shuttle is lifted in the vertical direction Z-Z (Figure 9) until the forks 1215 are brought into contact with the lower surface of the battery 1E;
- plates are integrated into the rest surface of the forks; the plates being connected to sensors that are able to signal the contact with the lower surface of the battery;
the control of the station thus enables the actual lifting to be ensured that releases the rest wheels of the battery from the corresponding guides on the frame of the vehicle.

The battery is partially extracted in the longitudinal direction X-X, stopping as soon as the battery is outside the bodywork. In this position, the body of the battery is visible to a measuring sensor fitted to the base of the upright 1002 of Figure 2; during extraction of the battery, the shuttle stops for the time necessary to permit detecting and determine measuring.

The real position in the transverse direction Y-Y can then be recorded. After the position in the transverse direction Y-Y has been stored, which is added to the records of the position in the vertical direction Z-Z and in the longitudinal direction X-X, the complete extraction of the discharged battery is carried out.

In these conditions, the shuttle returns to the platform (Figure 10), taking the dead battery 1E outside the vehicle and aligned in the longitudinal direction X-X with the compartments housing the batteries.

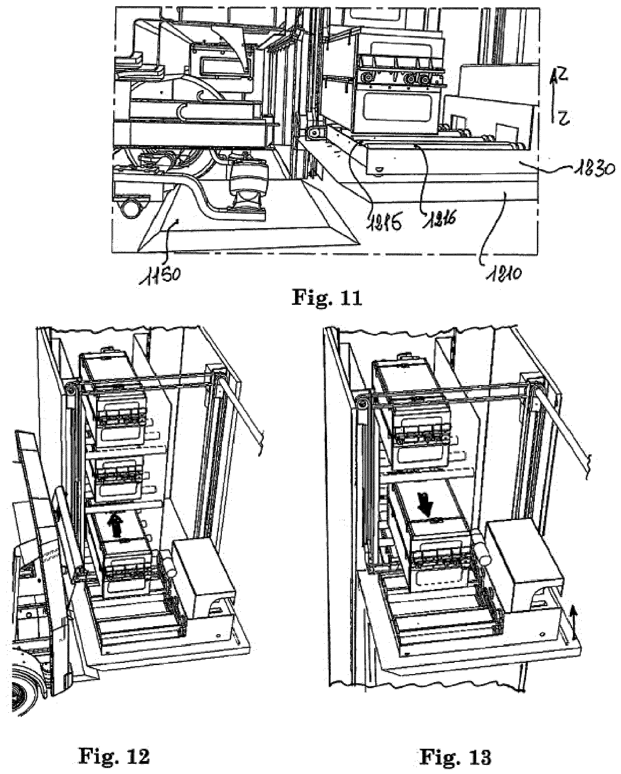

The lifting unit is driven (Figure 11) and the platform 1210 with the entire shuttle and battery rise as far as the level of the first free compartment, the rollers 1216 of the shuttle are driven with the rollers 1111 of the free compartment for containing the dead battery 1E, actuating the transfer of the latter inside the free compartment (Figure 12);

### Removing charged battery

- The platform then moves vertically together with the empty shuttle and is arranged at a compartment with a first available charged battery 1C (Figure 13);
- the rollers 1111 of the compartment, temporarily connected to the transmission of the rollers 1216 of the shuttle, enable the charged battery to be extracted and positioned on the forks of the shuttle, reusing the previously stored measurements in the transverse direction Y-Y to reposition, with a sufficiently small tolerance, the grooved wheels of the battery in a position corresponding to that of the previously extracted dead battery 1E and thus of the guides in the compartment of the vehicle.

When this position in a transverse direction Y-Y has been reached, the structure of the forks starts to rise again in the vertical direction Z-Z, disconnecting the battery from the surface of the rollers.

In this manner, the battery is made integral with the forks unit that will subsequently push the battery into the compartment of the vehicle.

The sequence continues with the subsequent vertical descent movement as far as the ground platform.

From here, after recovering the previously stored position references of the vehicle in the transverse direction Y-Y and in the vertical direction Z-Z, the movement in the longitudinal direction X-X is carried out that brings the grooved wheels of the battery on the respective longitudinal guides of the vehicle and thus to the complete insertion of the charged battery 1C into the vehicle.

At the end of the replacement cycle, the forks are released from contact with the bottom of the battery and the shuttle retracts to stop inside the lifting platform.

The platform rises again to its normal wait position, preferably at the top inside the apparatus.

After this position that is defined as being safe also for the operator has been reached, the rear closing doors open, and the zone returns to be available for the intervention by the driver.

In a reverse sequence, the battery is then immobilized in the compartment of the vehicle, the electric connections are restored and the door 12 is closed.

If envisaged, the platform 1150 is returned to the raised closed position, freeing the road surface from the obstacle.

Further, there is the possibility of creating veritable replacement and automatic recharging stations that are equipped with the apparatus according to the invention.

It is thus clear that the apparatus according to the invention enables an automatic change of batteries of electric propulsion vehicles to be performed, reducing the intervention of specialised staff, further meeting a modular design criterion that adds flexibility to the system.

The configuration disclosed in the embodiment with a storage compartment with three battery places can also be different, including for example only two places or three+three places to serve several vehicles.

According to possible plans, the automatic stations are installed along a set and constant travel line for electric propulsion vehicles of a transport network like for example urban bus routes.

The distributed replacement and recharging stations also help to decentralize the supply for recharging that is otherwise intended for the vehicle deposits.

From this point of view, it has been found that whilst centralized use extending to many electric vehicles requires devices provided with electrical plants suitable for simultaneous recharging of many batteries, recharging distributed over various replacement stations can on the other hand be achieved in units of reduced size.

The solution disclosed is also applicable to vehicles that are still in service and enables adaptation to a new route configuration without having to overhaul the vehicle design even with all the evolving updates and technical developments.

Although some embodiments of some preferred examples of implementing the invention have been disclosed, the scope of protection of this patent is determined only by the following claims.

## Claims

1. Apparatus for automatically replacing batteries of electric propulsion vehicles (10) including:
- a cabinet (1000) including:
- a first storage space (1100), configured to house at least one charged battery (1C) and at least one dead battery (1E);
- a second operating space (1200), communicating with the first storage space to move the batteries (1E, 1C);
- operating means (1220, 1230) displaceable in a longitudinal direction (X-X) between the operating space (1200) and a predefined vehicle parking area, configured to remove one or more dead batteries (1E) from the vehicle (10) and insert said one or more dead batteries into the first storage space (1100), and remove one or more charged batteries (1C) from the first storage space (1100) and insert said one or more charged batteries (1C) in the vehicle (10);
- positioning means (1150) for positioning a vehicle, within the parking area in a predefined position with respect to the operating space;
- position sensor means designed to detect the positioning of the vehicle and/or of a battery arranged inside the vehicle and emit corresponding position signals;
- a process and control unit (500) designed to receive said position signals and control the operating means.

2. Apparatus according to claim 1, **characterized in that** said storage space includes at least two housing compartments (1110, 1120), each designed to contain a battery (1C, 1E); each compartment including a support surface and means for moving the battery in a transverse direction (Y-Y) in order to insert/remove it into/from the compartment (1110, 1120), preferably including rollers (1111) extending in the longitudinal direction (X-X) and able to be rotationally driven about a longitudinal axis.

3. Apparatus according to claim 1 or 2, **characterized in that** it includes a platform (1210), displaceable in both senses of a vertical direction (Z-Z) within the second operating space (1200) between a lowered position substantially corresponding to a level for the motion of the operating means (1220, 1230) between the operating space (1200) and the parking area, and one or more raised levels corresponding to one or more housing compartments of the first storage space (1100) for housing a battery (1C, 1E).

4. Apparatus according to claim 3, **characterized in that** said operating means (1220, 1230) for removing/inserting one or more batteries (1E/1C) includes a shuttle (1230) displaceable in both senses of the longitudinal direction X-X from a retracted position inside the operating space (1200) to an advanced position of positioning in the parking area of the vehicle, below the battery (1E) to be removed from the vehicle (10).

5. Apparatus according to claim 4, **characterized in that** said shuttle (1230) is moved in both directions in the longitudinal direction (X-X) by a position-controlled drive (1231), preferably an electric drive which rotationally drives driving wheels of the shuttle (1230).

6. Apparatus according to claim 4, or 5, **characterized in that** the operating means (1220, 1230), in particular the shuttle (1230), includes battery raising/lowering means in a vertical direction (Z-Z), preferably including forks (1215) for gripping and supporting a battery which are movable in both senses of the vertical direction (Z-Z).

7. Apparatus according to the preceding claim, **characterized in that** it includes a position-controlled drive for controlling the operation of the battery raising/lowering means in the vertical direction (Z-Z), in particular for controlling the motion of said forks (1215) in the vertical direction (Z-Z).

8. Apparatus according to the preceding claim **characterized in that** the battery raising/lowering means drive includes a position-controlled motor (124) connected to a ball screw (1242) the ball nut (1242a) of which is connected to a kinematic chain (1243) designed to cause the movement in both senses of the vertical direction (Z-Z) of the forks (1215) to raise/lower the battery (1C, 1E) during the removal/insertion steps.

9. Apparatus according to any one of claims 4 to 8, **characterized in that** the operating means (1220, 1230), in particular the shuttle (1230), includes means (1216) for moving a battery (1C, 1E) in the transverse direction (Y-Y), preferably including rollers (1216) extending in the longitudinal direction (X-X) and drivable in two opposite senses of rotation for moving a battery in the transverse direction (Y-Y).

10. Apparatus according to the preceding claim, **characterized in that** it includes a position-controlled drive for controlling the operation of the means (1216) for moving a battery in the transverse direction Y-Y, in particular designed to cause rotation of the rollers (1216) for moving a battery in said transverse direction (Y-Y).

11. Apparatus according to one of the preceding claims, **characterized in that** the vehicle positioning means includes an end-of-travel reference stop (1151) for stopping the travel of the vehicle (10) in the longitudinal direction X-X, and/or position markers (1152) arranged at a suitable distance from each other in the transverse direction Y-Y for correct positioning of the vehicle in the transverse direction (Y-Y).

12. Apparatus according to one of the preceding claims, **characterized in that** the position sensor means includes one or more sensors designed to measure a distance of one or more reference surfaces of the vehicle and/or of the battery in the vehicle to determine a real position in the transverse direction Y-Y of the battery in the vehicle in relation to the parking area; said sensors being preferably of the contactless detection type.

13. Apparatus according to one of the preceding claims, **characterized in that** it includes sensors for detecting the position of the battery in the vertical direction (Z-Z).

14. Apparatus according to one of the preceding claims, **characterized in that** the control unit (500) includes areas for memorizing the positioning coordinates of the vehicle both in the longitudinal direction (X-X) and in the transverse direction (Y-Y) and of the battery in the vertical direction (Z-Z) detected during positioning of the vehicle (10) in the parking area and/or during extracting the dead battery (1E) from the vehicle.

15. Apparatus according to one of the preceding claims, wherein the first storage space (1100) includes means for recharging and/or monitoring the charged state of the one or more stored batteries.

16. Apparatus according to one of the preceding claims, wherein the cabinet (1000) includes safety doors (1003) which can be operated so as to be arranged in a closed position which defines a safety perimeter which encloses the first storage space (1100) and the second storage space(1200) of the cabinet (1000) and at least partially the parking area of the vehicle, preventing access from the outside, and in an open position for allowing access to the cabinet (1000) and/or to the parking area; wherein, preferably, the doors (1003) can be also be operated so as to be arranged in a rest position, with safety closing of the cabinet (1000) when it is not used to replace batteries.

17. Automatic station for the replacement of batteries of electric propulsion vehicles (10) **characterized in that** it includes at least one replacement apparatus according to one of the preceding claims.

18. Public transport network, including: one or more vehicles (10) with electric propulsion by means of one or more replaceable batteries arranged in the vehicle (10), wherein the one or more vehicles (10) move along one or more travel routes and one or more automatic replacement stations according to the preceding claim arranged along said one or more travel routes.

19. Method for replacing a dead battery (1E) of a vehicle (10) with a charged battery (1C), including the steps of:
- removing the dead battery (1E) from a vehicle (10) parked in a parking area;
- depositing the dead battery (1E) in a storage space (1100);
- removing a charged battery (1C) present in the storage space (1100);
- positioning the charged battery (1C) in the vehicle (10),
**characterized in that** the method is implemented by an apparatus according to one of claims 1-16.
